# EUROPÄISCHE PATENTANMELDUNG

(11) **EP 4 512 607 A1**
(43) Veröffentlichungstag der Anmeldung: **26.02.2025**
(21) Anmeldenummer: 24190131.3
(22) Anmeldetag: 22.07.2024
(51) Int. Cl.: B30B 9/22, B30B 9/26, B01D 29/27

(54) **DRAINAGEELEMENT FÜR EINE PRESSE ZUM AUSPRESSEN VON FLÜSSIGKEITSHALTIGEN STOFFEN**

(30) Priorität: 22.08.2023 DE 102023122402
(71) Anmelder: Willmes Anlagentechnik GmbH, 64653 Lorsch (DE)
(72) Erfinder: Krammer, Volker, 69469 Weinheim (DE)
(74) Vertreter: Kesselhut, Wolf

(57) **Zusammenfassung**

Ein Drainageelement (20) für eine Presse (1) zum Auspressen von flüssigkeitshaltigen Stoffen, welche einen Pressbehälter (2) umfasst, dessen Behälterinnenraum (6) durch eine Membran (8) in einen Druckmittelraum (10) und einen Pressmittelraum (12) unterteilbar ist, umfassend einen Grundkörper (24) aus flexiblem Siebgewebe (24a), der mit einem ersten Ende (22) an der Innenwand des Pressbehälters (2) befestigbar ist, zeichnet sich dadurch aus, dass das flexible Siebgewebe (24a) am ersten Ende (22) des Grundkörpers (24) um ein leistenförmiges Verstärkungselement (26) aus festem Material herum geführt und in einem Verbindungsbereich (28) unter Bildung einer Schlaufe (29) entlang wenigstens einer Naht (30) vernäht ist, wobei das Verstärkungselement (26) Öffnungen (32) aufweist, mittels welcher das Drainageelement (20) an der Innenwand des Pressbehälters (2) befestigbar ist, und dass das Verstärkungselement (26) und das um dieses unter Bildung einer Schlaufe (29) herum geführte Siebgewebe (24a) einschließlich des Verbindungsbereichs (28) von einem elastischen, lebensmittelverträglichen Vergussmaterial (40) ummantelt sind, welches die Maschen des flexiblen Siebgewebes (24a) vollständig ausfüllt und gegen ein Eindringen von Flüssigkeit kapselt. Die Erfindung betrifft weiterhin ein Verfahren zur Herstellung eines solchen Drainageelementes (20).

## Beschreibung

Die Erfindung betrifft ein Drainageelement für eine Presse zum Auspressen von flüssigkeitshaltigen Stoffen, insbesondere von landwirtschaftlichen und chemischen Produkten, sowie ein Verfahren zur Herstellung eines solchen gemäß dem Oberbegriff von Anspruch 1 und 10.

Pressen zum Auspressen von flüssigkeitshaltigen Stoffen sind beispielsweise aus der EP 1438185 B1 bekannt, und werden dazu verwendet, den als Ausgangsstoff zur Herstellung von Wein oder Fruchtsaft verwendeten Traubensaft aus in die Presse eingefüllten Trauben oder Früchten herauszupressen. Die in der EP 1438185 B1 beschriebene Presse, besitzt einen geschlossenen, um seine waagerechte Längsachse in Rotation versetzbaren Behälter, dessen Innenraum durch wenigstens eine Pressmembran in einen Druckmittelraum und einen Pressmittelraum unterteilt wird, in denen das Pressgut eingefüllt wird. Im Behältermantel ist eine durch einen Deckel verschließbare Einfüll- und Entleeröffnung für das Pressgut angeordnet, der ein im Pressraum befindlicher Saftablauf gegenüber liegt. Im Pressraum sind weiterhin über den Durchmesser und im Wesentlichen senkrecht zur Behälterachse angeordnete flüssigkeitsdurchlässige Drainageelemente angeordnet, die sich diametral im Behälter erstrecken. Die Drainageelemente umfassen ein elastisches oder flexibles Stützelement, um welches herum ein Schlauch aus saftdurchlässigen Siebgewebe angeordnet ist. Das eine Ende des Schlauchs ist mit einem Klemmstück verbunden, welches während des Pressvorgangs an der Innenseite des Pressbehälters aufgenommen ist. In der Entsaftungsposition des um seine Längsachse rotierbaren Pressbehälters erstrecken sich die Drainageelemente in einer im Wesentlichen vertikalen Richtung, um den Saft aus dem Innenraum des saftdurchlässigen Siebgewebes in den am Boden des Pressbehälters gelegenen Saftablauf zuzuführen, mit welchem das Drainageelement mit seinem zweiten Ende verbunden ist.

Bei der zuvor beschriebenen Presse ergibt sich das Problem, dass die Drainageelemente während des Pressvorgangs hohen Kräften ausgesetzt sind, die insbesondere an den Enden, an denen das Siebgewebe an der Innenseite des Pressbehälters befestigt ist, leicht zu einer Ermüdung des Materials im Klemmbereich führen.

Demgemäß wurden von der Anmelderin zwischenzeitlich Drainageelemente für die zuvor genannten Pressen entwickelt, die einen Grundkörper aus flexiblem Siebgewebe besitzen, das an einem ersten Ende des Grundkörpers um ein leistenförmiges Verstärkungselement aus festem Material herum umgeschlagen und in einem Verbindungsbereich unter Bildung einer Schlaufe vernäht ist. Das Verstärkungselement weist Öffnungen auf, mittels welcher das Drainageelement an entsprechenden Haken im Pressmittelraum der Presse befestigt werden kann. Hierbei sind in das Siebgewebe im Bereich der Öffnungen der Verstärkungselement korrespondierende Öffnungen eingebracht, durch die an der Innenwand des Pressbehälters befestigte Haken bzw. Bolzen hindurchgreifen, um das zugehörige Ende des Drainageelements an der Innenwand des Pressbehälters zu halten.

Wie anhand von Versuchen gefunden wurde, ergibt sich durch das Vernähen des Siebgewebes im Verbindungsbereich das Problem, dass die innenliegenden Gewebeteile verdeckt sind. Zudem besteht die Gefahr, dass es leicht zu einer Beschädigung der empfindlichen Pressmembran kommen kann, wenn das Ende des Drainageelements im Pressbehälter bei der Montage versehentlich fallen gelassen wird und das aus Metall bestehende Verstärkungselement aus beispielsweise zwei Metern Höhe, oder bei großen Pressen sogar mehr, auf die am Boden befindliche Pressmembran aufschlägt.

Wie die Anmelderin in internen Versuchen erkennen konnte, besteht ein weiteres Problem der zuletzt beschriebenen Drainageelemente besteht, dass die Naht im Verbindungsbereich und die mitunter aufgenähten Seitenstücke, die zum Verkleiden des Verbindungsbereichs dienen, nicht flüssigkeitsdicht sind. Hierdurch kann Saft im Verbindungsbereich durch die Maschen des Siebgewebes hindurch in den Innenraumbereich des Siebgewebes eindringen, der durch die aufgenähten und in der Regel flüssigkeitsdichten Seitenstücke abgedeckt wird. Da der eingetretene Saft bei einer nachfolgenden Reinigung der Drainageelemente mit aufgesprühtem Wasser nicht vollständig entfernt werden kann, kommt es leicht zu einer unerwünschten Geruchsbildung, die insbesondere durch ein Vergären der Saftrückstände durch Essigbakterien entsteht.

Demgemäß ist es eine Aufgabe der vorliegenden Erfindung, ein Drainageelement zu schaffen, welches das Eindringen von Saft in verdeckte Hohlräume des Siebgewebes im Bereich der Enden des Drainageelements verhindert.

Diese Aufgabe wird erfindungsgemäß durch ein Drainageelement mit den Merkmalen von Anspruch 1 gelöst.

Eine weitere Aufgabe der Erfindung ist es, ein Verfahren zur Herstellung eines solchen Drainageelements zu schaffen.

Diese Aufgabe wird erfindungsgemäß durch ein Verfahren mit den Merkmalen von Anspruch 7 gelöst.

Eine weitere Aufgabe der Erfindung ist es, eine neuartige Verwendung eines solchen Drainageelements zu schaffen. Diese Aufgabe wird durch eine Verwendung mit den Merkmalen von Anspruch 11 gelöst.

Weitere Merkmale der Erfindung sind in den Unteransprüchen enthalten.

Die Erfindung wird nachfolgend mit Bezug auf die Zeichnungen anhand von bevorzugten Ausführungsformen beschrieben.

In den Zeichnungen zeigen:
- Fig. 1: eine schematische Querschnittsansicht des Pressbehälters mit einem eingesetzten Drainageelement, bei welchem das erste obere Ende des Drainageelements beispielhaft über an der Innenwand des Pressbehälters befestigte Haken gehalten wird, die in Öffnungen im länglichen Verstärkungselement eingreifen,
- Fig. 2: eine schematische abgebrochene Detaildarstellung des ersten Endes des Grundkörpers des Drainageelements mit schlaufenförmig vernähtem Siebgewebe und eingesetztem Verstärkungselement vor der Ummantelung mit dem Vergussmaterial,
- Fig. 3: eine schematische Querschnittsansicht des schlaufenförmig vernähten und zusammen mit dem leistenförmigen Verstärkungselement in die Vergussform eingesetzten ersten Endes des Grundkörpers des Drainageelements vor der Einleitung des Vergussmaterials,

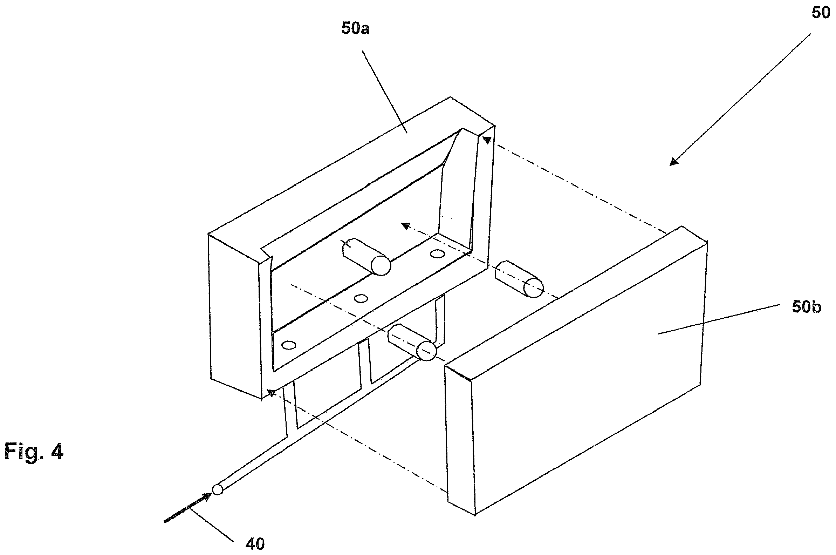

- Fig. 4: eine schematische Einzeldarstellung der geöffneten zweiteiligen Vergussform,
- Fig. 5: eine schematisierte räumliche Gesamtdarstellung von Drainageelement und geöffneter Vergussform, und
- Fig. 6: das erste Ende des Drainageelements mit der daran angeordneten Schutzkapselung nach dem Aushärten des Vergussmaterials und der Entnahme aus der Form.

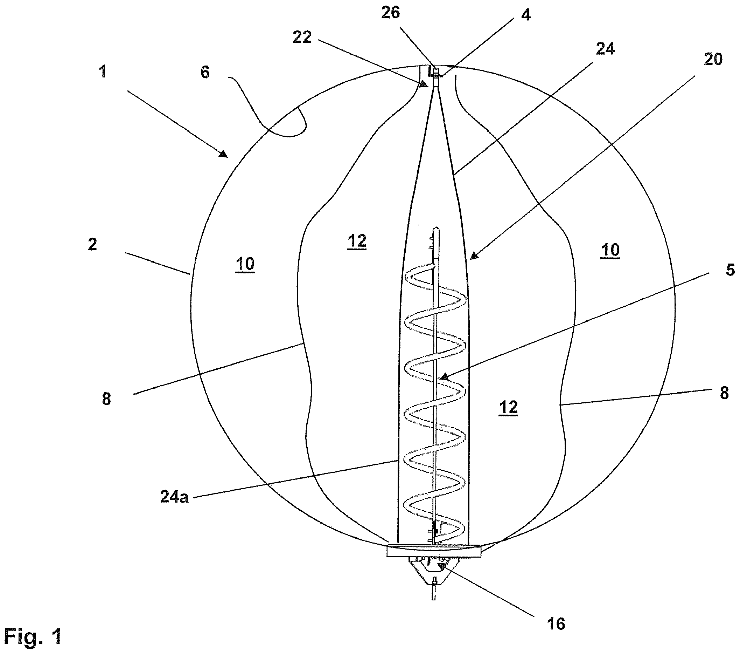

Wie in Fig. 1 gezeigt ist, umfasst eine erfindungsgemäße Presse 1 einen in Fig. 1 in der Querschnittsansicht dargestellten zylindrischen Behälter 2, der um seine Behälterlängsachse über nicht näher dargestellte Antriebseinrichtungen rotierbar ist. Innerhalb des Behälterinnenraumes 6 ist eine aus darstellungstechnischen Gründen nur schematisch angedeutete Pressmembran 8 angeordnet, die den Behälterinnenraum 6 in einen Druckmittelraum 10 und einen Pressmittelraum 12 unterteilt.

In den Pressmittelraum 12 wird das Pressgut, beispielsweise Weintrauben, in bekannter Weise durch wenigstens eine nicht dargestellte Einfüll- und Entleeröffnung eingefüllt, und der Druckmittelraum 10 nach dem Verschließen der Einfüll- und Entleeröffnung zwischen der Innenwand des Behälters 2 und der Membran 8 mit Druckluft beaufschlagt, welche einen Druck von bis zu 2 bar besitzen kann.

Auf der der Einfüll- und Entleeröffnung gegenüberliegenden Seite des Behälters 2 befindet sich ein Saftablauf 16, welcher während des Auspressvorgangs durch Drehen des Behälters 2 in die entsprechende Position auf der Unterseite des Behälters 2 angeordnet wird, und über den der ausgepresste Traubensaft einem nicht dargestellten Sammelbehälter zur weiteren Verarbeitung zugeführt wird.

Wie der Fig. 1 weiterhin entnommen werden kann, befindet sich im Inneren des Behälters 2 wenigstens ein erfindungsgemäßes flüssigkeitsdurchlässiges flexibles Drainageelement 20, das mit seinem ersten Ende 22 an der Innenwand des Pressbehälters 2 lösbar befestigt ist. Hierzu können an der Innenseite des Pressbehälters 2 beispielsweise lediglich schematisch angedeutete Haken 4 angeordnet sein, die in nachfolgend noch näher beschriebenen Ösen am ersten Ende 22 des Drainagelements 20 eingreifen.

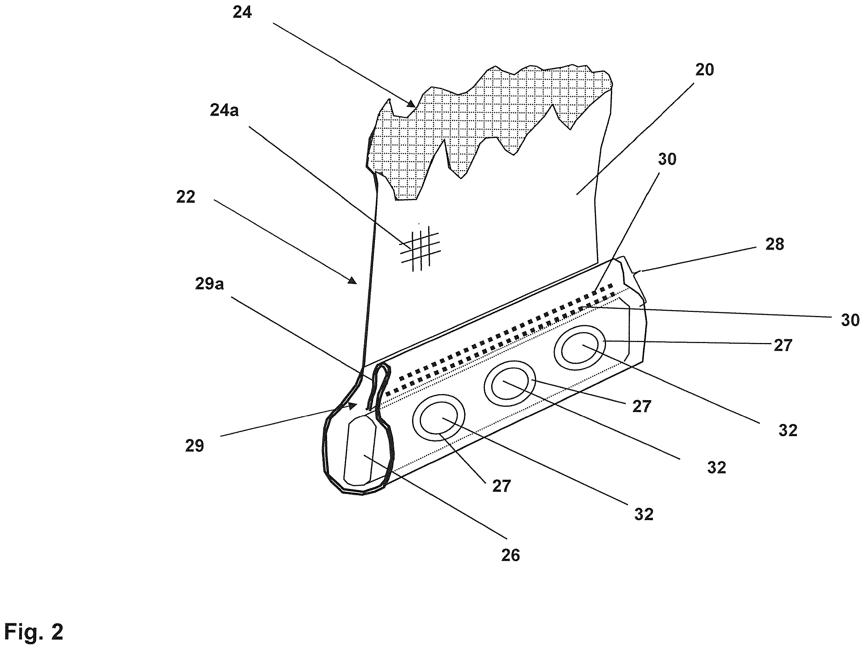

Gemäß der Darstellung der Figuren 1 und 2 besitzt das Drainageelement 20 einen Grundkörper 24 aus einem flexiblen schlauchförmigen, d. h. umfänglich zu einem Schlauch geformten Siebgewebe 24a, welches am ersten Ende 22 des Grundkörpers 24 um ein leistenförmiges Verstärkungselement 26 aus festem Material, insbesondere aus Metall, herumgeführt und in einem Verbindungsbereich 28 unter Bildung einer Schlaufe 29 entlang wenigstens einer Naht 30 vernäht ist. Wie der Darstellung der Figuren 2, 3 und 5 weiterhin entnommen werden kann, weist das Verstärkungselement 26 Öffnungen 32 auf, mittels welcher das Drainageelement 20 z.B. über die zuvor erwähnten, und in Fig. 1 angedeuteten Haken 4 an der Innenwand des Pressbehälters 2 lösbar befestigt werden kann.

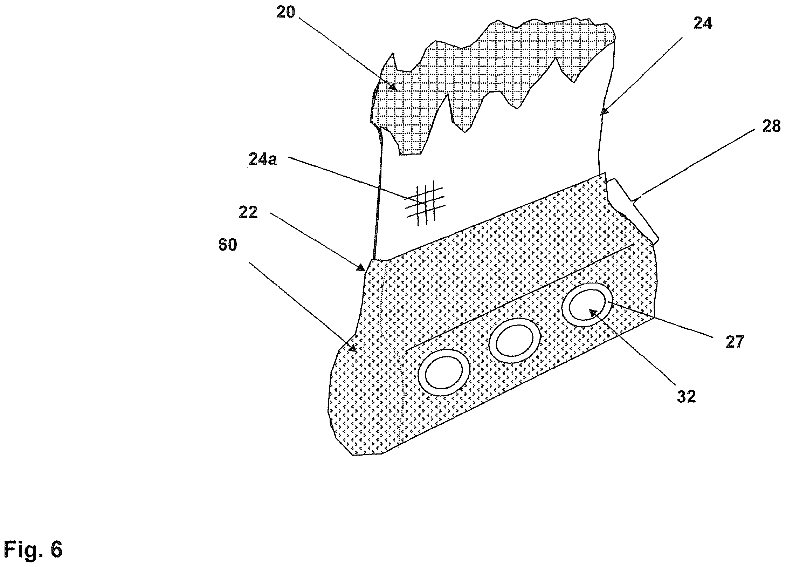

Gemäß der Erfindung sind das Verstärkungselement 26 und das um dieses unter Bildung einer Schlaufe 29 herum geführte Siebgewebe 24a einschließlich des Verbindungsbereichs 28 von einem elastischen, lebensmittelverträglichen Vergussmaterial 40, insbesondere Silikon, Polyurethan oder einem sonstigen elastischen Polymer ummantelt, welches die Maschen des flexiblen Siebgewebes 24a vollständig durchdringt und ausfüllt und gegen ein Eindringen von Flüssigkeit kapselt. Alternativ kann als Vergussmaterial auch Kautschuk oder ein thermoplastisches Kunststoffinaterial, wie z.B. Polypropylen, Polyethylen, Polyamid oder Polyoxymethylene (POM) oder ein Gemisch dieser Kunststoffe verwendet werden, welches/welche zum Ummanteln des ersten Endes des Drainageelements 20 durch Erwärmen verflüssigt wird und nach dem Abkühlen eine flüssigkeitsdichte flexible und dennoch schlagzähe Schutzkapselung 60 bereitstellt, wie dies in Fig. 6 dargestellt ist.

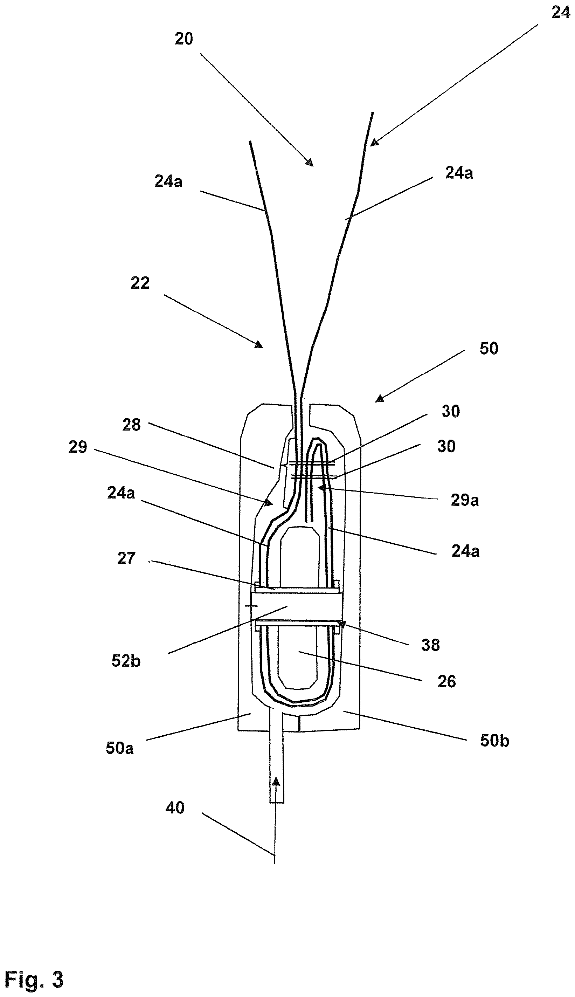

Um die Stabilität des während der Pressvorgänge durch die wirkenden Zugkräfte hoch belasteten Drainageelements 20 zu verbessern, wird das Siebgewebe 24a nach dem Umschlagen um das leistenförmige Verstärkungselement 26 an diesem bevorzugt durch hülsenartige Lochverstärkungen 27 fixiert, die bevorzugt als in Fig. 3 angedeutete Niethülsen ausgeführt sind, die sich durch im Siebgewebe 24a geformte Löcher sowie die Öffnungen 32 im Verstärkungselement 26 hindurch erstrecken. Die in Fig. 2 und 3 angedeuteten Köpfe der Niethülsen 27 pressen das Siebgewebe 24 hierbei nach dem Vernieten gegen die einander gegenüberliegenden Außenseiten des Verstärkungselements 26 .

Wie der Darstellung von Fig. 2 und 3 weiterhin entnommen werden kann, ist das freie Ende des um das Verstärkungselement 26 unter Bildung einer Schlaufe 29 herumgeführten Siebgewebes 24a bei der bevorzugten Ausführungsform der Erfindung im Bereich der Naht 30 unter Bildung einer weiteren endseitigen Schlaufe 29a vernäht, derart, dass sich die Naht 30 durch insgesamt sechs Lagen des Siebgewebes 24 erstreckt, bzw. das Nahtmaterial die sechs Lagen des Siebgewebes durchdringt. Hierdurch ergibt sich eine besonders hohe Festigkeit der Nahtverbindung, die, wie dargestellt, bevorzugt durch zwei parallel zueinander verlaufende Einzelnähte 30 gebildet wird.

Bei der bevorzugten Ausführungsform der Erfindung ist das Vergussmaterial 40 Silikon, welches im flüssigen Zustand mit einem bekannten, für Lebensmittel geeigneten Silikon-Vernetzer versetzt wird, um dieses in bekannter Weise nach dem Einfüllen in eine Form zu härten. Alternativ können auch andere vernetzbare Polymere eingesetzt werden, welche nach dem Aushärten die flexible, schlagzähe und bevorzugt auch flüssigkeitsabweisende lebensmittelneutrale Schutzkapselung 60 bilden.

Um die Drainageelemente 20 logistisch einfacher handhaben und z.B. einem bestimmte Pressentyp oder auch einem bestimmten Herstellungsjahr zuordnen zu können, kann das Vergussmaterial 40 Farbpigmente enthalten, insbesondere rote, blaue, grüne, gelbe, orangene, schwarze oder weiße Farbpigmente oder eine Mischung von diesen, welche dem Silikon, oder allgemein dem Vergussmaterial 40 eine gewünschte Farbe verleihen.

Alternativ kann das Vergussmaterial 40 auch ein thermoplastisches Kunststoffmaterial, insbesondere Polypropylen, oder Polyethylen, Polyamid oder Polyoxymethylene sein, oder ein solches enthalten, welches im geschmolzenen Zustand auf das Siebgewebe aufbringbar ist und nach dem Abkühlen im verfestigten Zustand eine schlagzähe und flexible Schutzkapselung 60 aus ausgehärtetem Vergussmaterial 40 bildet. Um die gewünschten Eigenschaften zu erhalten, kann auch ein Gemisch aus zwei oder mehr der genannten thermoplastischen Kunststoffe als Vergussmaterial 40 verwendet werden.

Um die zuvor erwähnten erfindungsgemäßen Drainageelemente 20 zu fertigen, kommt gemäß der Erfindung ein Verfahren mit den folgenden Verfahrensschritten zum Einsatz:
Zunächst wird ein länglicher Grundkörpers 24 aus umfänglich geschlossenem Siebgewebe 24a geformt, welches an einem ersten Ende 22 des Grundkörpers 24 um ein leistenförmiges Verstärkungselement 26 mit darin geformten Öffnungen 32 herum umgeschlagen wird. Das Siebgewebe 24a wird nach dem Umschlagen entlang wenigsten einer Naht 30 in einem Verbindungsbereich 28 unter Bildung einer Schlaufe 29 vernäht. Am zweiten Ende ist das Siebgewebe in bekannter Weise mit einem in Fig. 1 angedeuteten Flansch verbunden, beispielsweise durch Klemmen, mittels welchem der Innenraum des Grundkörpers 24 aus schlauchförmigem Siebgewebe 24a strömungsmäßig mit dem Saftablauf 16 verbunden wird, der sich in der Pressstellung von Fig. 1 an der Unterseite des Pressbehälters 2 befindet. Um hierbei einen hinreichenden Ablauf des Safts zu ermöglichen, ist im Inneren des schlauchförmigen Siebgewebes 24a des Grundkörpers 24 bevorzugt in bekannter Weise ein spiralförmiges Stützelement 5 angeordnet.

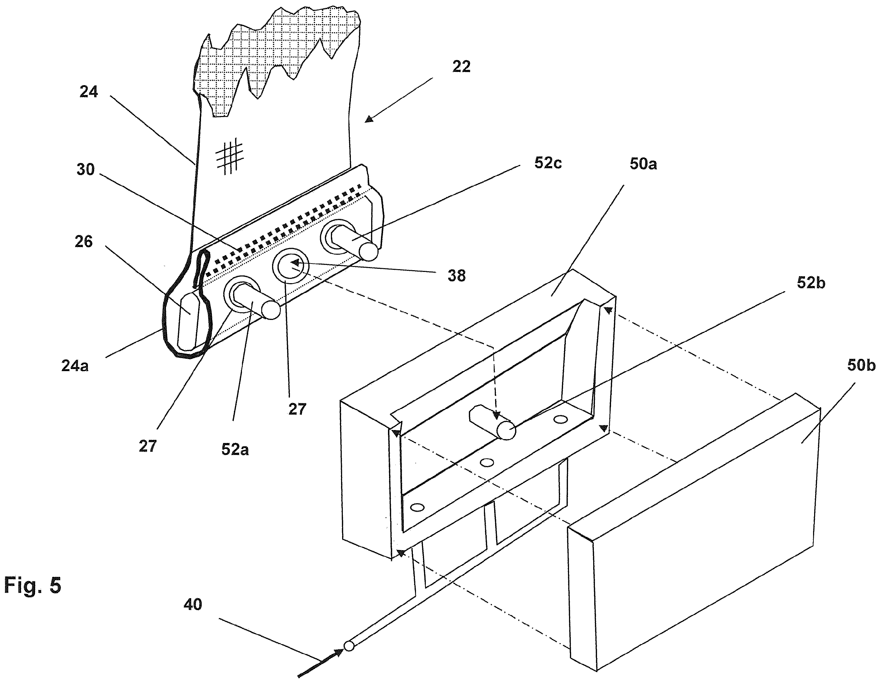

Das erste Ende 22 des Grundkörpers 24 wird als nächstes mit dem innerhalb der Schlaufe 29 angeordneten länglichen Verstärkungselement 26 von oben her in eine Vergussform 50, eingesetzt, wie dies in Fig. 5 angedeutet ist, und die Vergussform 50 nach dem Schließen derselben mit dem härtbaren flüssigen Vergussmaterial 40 befüllt, welches bevorzugt über eine Zuleitung 42 von unten her unter Druck in die erste Hälfte 50a der Gussform 50 eingeleitet wird. Durch das einleiten des flüssigen Vergussmaterial mit einem Überdruck, der zum Beispiel 0,5 bis 1 bar betragen kann, ergibt sich der Vorteil, dass das zu Anfang flüssige Vergussmaterial 40 das Siebgewebe 24a vollständig durchdringend und alle verbleibenden Hohlräume im Verbindungsbereich 28 ausgefüllt werden, sodass nach dem Aushärten des Vergussmaterials 40 ein zusammenhängender gummielastischer Block aus Vergussmaterial 40 entsteht, der eine hohe Stabilität besitzt.

Danach wird das Vergussmaterial 40 ausgehärtet und das erste Ende 22 des Grundkörpers 24 mit dem daran angeordneten ausgehärteten Vergussmaterial 40, welches eine schlagzähe und flexible Schutzkapselung 60 bildet, nach dem Öffnen der beiden Hälften 50a und 50b aus der Vergussform 50 entnommen.

Um das erste Ende des Grundkörpers 24 des Drainageelements 20 während des Befüllens der Vergussform 50 und dem Aushärten des Vergussmaterials 40 in der Form 50 relativ zu den Formhälften räumlich in seiner Lage zu sichern, wird das erste Ende 22 gegenüber den Formhälften 50a, 50b durch wenigstens einen Zapfen 52a, 52b, 52c in seiner Lage fixiert, der sich durch eine zugehörige Öffnung 32 des leistenförmigen Verstärkungselements 26 hindurch erstreckt, wie dies in Fig. 5 angedeutet ist.

Bei der bevorzugten Ausführungsform sind zwei oder mehr Zapfen 52 vorgesehen, die sich durch eine jeweilige Öffnung 32 im Verstärkungselement 26 erstrecken, und von denen bevorzugt lediglich ein Zapfen, bevorzugt der mittlere Zapfen 52b als Zentrierzapfen dient, der gestellfest mit der Vergussfonn 50 verbunden ist. Demgegenüber werden die beiden weiteren Zapfen 52a und 52c lediglich lose in die jeweilige Öffnung 32 eingesteckt, bevor das Verstärkungselemente 26 mit der mittleren Öffnung 32 auf den gestellfesten Zapfen 52b aufgesteckt und die beiden Formhälften 50a und 50b zusammen gefahren werden. Hierdurch ergibt sich der Vorteil, dass Maßtoleranzen, die beim Vernähen des flexiblen Siebgewebes 24a leicht auftreten, problemlos kompensiert werden können.

Um weiterhin eine Eindringen des Vergussmaterials 40 in die Öffnungen 32 im Verstärkungselement 26 zu verhindern, besitzt die Vergussform im Bereich der Öffnungen 32 eine auf die Länge der Zapfen 52 abgestimmte lichte Weite, die derart gewählt ist, dass die Zapfen 52a, 52b und 52c nach dem Schließen der Form 50 und während des Befüllens derselben mit dem Vergussmaterial 40 mit ihren Stirnflächen an der jeweiligen Innenwand der ersten und zweiten Formhälfte 50a, 50b anliegen.

Obgleich als Vergussmaterial 40 bevorzugt härtbares flüssiges Silikon eingesetzt wird, welches vor dem Einleiten in die Vergussform 40 mit einem bekannten Vernetzungsmittel versetzt wurde, kann es ebenfalls vorgesehen sein, dass die Vergussform 50 als eine bekannte beheizbare Kunststoff-Spritzgussform ausgestaltet ist (nicht dargestellt), in die erhitztes thermoplastisches Kunststoffmaterial über entsprechende Düsen unter hohem Druck eingespritzt wird, um das Siebgewebe 24a und das von diesem umschlossene Verstärkungselement 26 mit einer Schutzkapselung 60 aus Kunstsoff, z.B. aus Polypropylen, Polyethylen, POM oder auch Polyamid, oder Mischungen derselben, zu umspritzen.

### Bezugszeichenliste

1 Presse
2 Pressbehälter
4 Haken
5 spiralförmiges Stützelement
6 Behälterinnenraume
8 Pressmembrane
10 Druckmittelraum
12 Pressmittelraum
16 Saftablauf
20 Drainageelement
22 erstes Ende des Grundkörpers
24 Grundkörper
24a Siebgewebe
26 leistenförmiges Verstärkungeelement
27 hülsenartige Lochverstärkungen/Niethülsen
28 Verbindungsbereich
29 Schlaufe
29aweitere endseitige Schlaufe
30 Naht
32 Öffnungen
40 Vergussmaterial
50 Vergussform
50aerste Hälfte der Vergussform
50b zweite Hälfte der Vergussform
52a loser Zapfen
52b gestellfester Zentrierzapfen
52c loser Zapfen
60 Schutzkapselung

## Patentansprüche

1. Drainageelement (20) für eine Presse (1) zum Auspressen von flüssigkeitshaltigen Stoffen, umfassend einen Grundkörper (24) aus schlauchförmigem, flexiblem Siebgewebe (24a), der dazu eingerichtet ist, mit einem ersten Ende (22) an der Innenwand eines Pressbehälters (2) der Presse (1) aufgenommen zu werden, **dadurch gekennzeichnet, dass**
das flexible Siebgewebe (24a) am ersten Ende (22) des Grundkörpers (24) um ein leistenförmiges Verstärkungselement (26) aus festem Material herum geführt und in einem Verbindungsbereich (28) unter Bildung einer Schlaufe (29) entlang wenigstens einer Naht (30) vernäht ist, wobei das Verstärkungselement (26) Öffnungen (32) aufweist, mittels welcher das Drainageelement (20) an der Innenwand des Pressbehälters (2) befestigbar ist, und dass
das Verstärkungselement (26) und das um dieses unter Bildung einer Schlaufe (29) herum geführte Siebgewebe (24a) einschließlich des Verbindungsbereichs (28) von einem elastischen, lebensmittelverträglichen Vergussmaterial (40) ummantelt sind, welches die Maschen des flexiblen Siebgewebes (24a) vollständig ausfüllt und gegen ein Eindringen von Flüssigkeit kapselt.

2. Vorrichtung nach Anspruch 1,
**dadurch gekennzeichnet,**
**dass** das Siebgewebe (24a) mit dem leistenförmigen Verstärkungselement (26) durch hülsenartige Lochverstärkungen (27) verbunden ist, welche sich durch im Siebgewebe (24a) und im Verstärkungselemente (26) geformte Öffnungen (32) hindurch erstrecken, wobei die Köpfe der Niethülsen (27) das Siebgewebe (24a) gegen die einander gegenüberliegenden Außenseiten des Verstärkungselements (26) pressen.

3. Vorrichtung nach Anspruch 1 oder 2,
**dadurch gekennzeichnet,**
**dass** das freie Ende (22) des um das Verstärkungselement (26) unter Bildung einer Schlaufe (29) herumgeführten Siebgewebes (24a) im Bereich der Naht (30) unter Bildung einer weiteren endseitigen Schlaufe (29a) vernäht ist, derart, dass sich die Naht (30) durch insgesamt sechs Lagen des Siebgewebes (24a) erstreckt.

4. Vorrichtung nach Anspruch 3,
**dadurch gekennzeichnet,**
**dass** das Vergussmaterial (40) Silikon ist, oder ein solches enthält, oder Kautschuk ist, oder solchen enthält.

5. Vorrichtung nach einem der Ansprüche 1 bis 3,
**dadurch gekennzeichnet,**
**dass** das Vergussmaterial (40) ein thermoplastisches Kunststoffmaterial, insbesondere Polypropylen, oder Polyethylen, Polyamid oder Polyoxymethylene ist, oder ein solches enthält, welches im geschmolzenen Zustand auf das Siebgewebe (24a) aufbringbar ist und im verfestigten Zustand eine schlagzähe und flexible Schutzkapselung (60) aus Vergussmaterial (40) bildet.

6. Vorrichtung nach einem der vorhergehenden Ansprüche,
**dadurch gekennzeichnet,**
**dass** das Vergussmaterial (40) Farbpigmente enthält, insbesondere rote, blaue, grüne, gelbe, orangene, schwarze oder weiße Farbpigmente oder eine Mischung von diesen.

7. Verfahren zur Herstellung eines Drainageelements nach einem der vorhergehenden Ansprüche,
**gekennzeichnet durch** die folgenden Verfahrensschritte:
Bereitstellen eines länglichen Grundkörpers (24) aus umfänglich geschlossenem schlauchförmigem Siebgewebe (24a), Umschlagen des Siebgewebes (24a) an einem ersten Ende (22) des Grundkörpers (24) um ein leistenförmiges Verstärkungselement (26) mit darin geformten Öffnungen (32) herum und Vernähen des Siebgewebes (24a) entlang einer Naht (30) in einem Verbindungsbereich (28) unter Bildung einer Schlaufe (29), Einsetzen des ersten Endes (22) des Grundkörpers (24) mit dem innerhalb der Schlaufe (29) angeordneten länglichen Verstärkungselement (26) von oben her in eine Vergussform (50),
Befüllen der Vergussform (50) mit einem härtbaren flüssigen Vergussmaterial (40),
Aushärten des Vergussmaterials (40) und Entnehmen des ersten Endes (22) des Grundkörpers (24) mit dem daran angeordneten ausgehärteten Vergussmaterial (40) aus der Vergussform (50).

8. Verfahren nach Anspruch 7,
**dadurch gekennzeichnet,**
**dass** das erste Ende des Grundkörpers (24) des Drainageelements (20) in der Vergussform (50) während des Befüllens der Form (50) und dem Aushärten des Vergussmaterials (40) durch wenigstens einen Zapfen (52a, 52b, 52c) fixiert wird, der sich durch eine der Öffnungen des leistenförmigen Verstärkungselements (26) hindurch erstreckt.

9. Verfahren nach Anspruch 8,
**dadurch gekennzeichnet,**
**dass** zwei oder mehr Zapfen (52, 52a, 52b, 52c) vorgesehen sind, welche sich durch eine jeweilige Öffnung (32) im Verstärkungselement (26) erstrecken, und dass einer der Zapfen (52b) gestellfest mit der Vergussform (50) verbunden, und wenigsten ein weiterer Zapfen (52a, 52c) verschiebbar in der zugehörigen Öffnung (32) aufgenommen ist.

10. Verfahren nach einem der Ansprüche 8 oder 9,
**dadurch gekennzeichnet,**
**dass** die Vergussform eine erste Formhälfte (50a) mit dem in dieser angeordneten gestellfesten Zapfen (52b) und eine zweite komplementäre Formhälfte (50b) umfasst, zwischen denen das erste Ende (22) des Grundkörpers (24) mit den in die Öffnungen (32) eingesetzten Zapfen (52 a, 52c) nach dem Aufstecken des Verstärkungselements mit der zugehörigen Öffnung (32) auf den gestellfesten Zapfen (52b) aufnehmbar ist, wobei die Zapfen (52a, 52b und 52c) eine solche Länge besitzen, dass diese nach dem Schließen der Form (50) und während des Befüllens derselben mit dem Vergussmaterial (40) mit ihren Stirnflächen an der jeweiligen Innenwand der Formhälfte (50a, 50b) anliegen, derart, dass ein Eindringen von Vergussmaterial (40) in die Öffnungen (32) verhindert wird.

11. Verwendung eines Drainageelements (20) nach einem der Ansprüche 1 bis 6 in einer Presse (1) zum Auspressen von flüssigkeitshaltigen Stoffen, welche einen Pressbehälter (2) umfasst, dessen Behälterinnenraum (6) durch eine Membran (8) in einen Druckmittelraum (10) und einen Pressmittelraum (12) unterteilt ist, wobei das Drainageelement (20) einen Grundkörper (24) aus flexiblem Siebgewebe (24a) besitzt, der mit einem ersten Ende (22) an der Innenwand des Pressbehälters (2) befestigbar ist,
**dadurch gekennzeichnet, dass**
das flexible Siebgewebe (24a) am ersten Ende (22) des Grundkörpers (24) um ein leistenförmiges Verstärkungselement (26) aus festem Material herum geführt und in einem Verbindungsbereich (28) unter Bildung einer Schlaufe (29) entlang wenigstens einer Naht (30) vernäht ist, wobei das Verstärkungselement (26) Öffnungen (32) aufweist, mittels welcher das Drainageelement (20) an der Innenwand des Pressbehälters (2) befestigbar ist, und dass
das Verstärkungselement (26) und das um dieses unter Bildung einer Schlaufe (29) herum geführte Siebgewebe (24a) einschließlich des Verbindungsbereichs (28) von einem elastischen, lebensmittelverträglichen Vergussmaterial (40) ummantelt sind, welches die Maschen des flexiblen Siebgewebes (24a) vollständig ausfüllt und gegen ein Eindringen von Flüssigkeit kapselt.
